# EUROPEAN PATENT SPECIFICATION

(11) **EP 4 402 989 B1**
(45) Date of publication and mention of the grant of the patent: **22.07.2026**
(21) Application number: 22868470.0
(22) Date of filing: 16.09.2022
(51) Int. Cl.: H05B 3/26, A47J 37/08

(54) **TOASTER WITH BREAD LIFT MECHANISM**
BROTRÖSTER MIT BROTHEBEMECHANISMUS
GRILLE-PAIN AVEC MÉCANISME DE LEVAGE DE PAIN

(30) Priority: 16.09.2021 AU 2021902985
(43) Date of publication of application: 24.07.2024
(73) Proprietor: Breville Pty Limited, Alexandria, New South Wales 2015 (AU)
(72) Inventor: HELLMERS, Duncan Bruce, Bourke Road Alexandria, New South Wales 2015 (AU); THIE, Johnson, Bourke Road Alexandria, New South Wales 2015 (AU); MCCLEAN, Stephen John, Bourke Road Alexandria, New South Wales 2015 (AU)
(74) Representative: Marks & Clerk LLP
(86) International application number: PCT/AU2022/051118
(87) International publication number: WO 2023/039636

(56) References cited:
- US-A- 2 301 070
- US-A- 2 301 070
- US-A- 2 590 334
- US-A- 2 590 334
- US-A- 2 667 828
- US-A- 2 818 011
- US-A- 2 861 513
- US-A- 3 350 997
- US-A- 3 461 274
- US-A- 5 802 957
- US-A1- 2016 338 538
- US-B2- 8 336 449

## Description

### FIELD

The invention relates to toasters that have automatic lifting and lowering mechanisms for the bread.

### BACKGROUND

While toasters are sometimes used to toast pastries, muffins and other foods they predominately toast slices of bread and the invention will be described with reference to this primary use. However, terms such as "bread carriage" are not to be construed as restricting the toaster to use with bread as toasters are equally suitable for a range of other food products.

The majority of modern toasters have two or more upwardly facing slots for receiving slices of bread. These slots lead to respective bread carriages within the body of the toaster. The bread carriages are in an elevated position when the slice is placed through the slot so that a significant portion of the bread is left protruding from the toaster body. To toast the bread, the carriage is moved from the elevated position to a lowered position for simultaneously toasting both sides of the slice.

Traditionally the carriage is moved manually by the user to the lowered position. More sophisticated toasters have a mechanism to actively move the carriage between the elevated position and the lowered position and vice versa (see, for example US 8,336,449 B2). This mechanism may use a motor to elevate and lower the carriage, but the addition of these components requires careful consideration to shield them from the heaters during the toasting operation. Other toasters have used horizontal expansion and contraction of the heating elements to assist the movement of the bread carriage (see, for example US 2,590,334 and AU 4170878). Converting the horizontal expansion of heater elements to a vertical movement requires a complex mechanism. The complexity of the mechanism inherently increases the mechanical losses and the efficiencies in converting horizontal expansion to vertical lifting forces acting on the bread carriage. Furthermore, the horizontal heating wires for toasting the bread need flexible tensioning mechanisms to keep them flat against a supporting panel of thermally insulating heat shields (typically made of mica). Without tensioning the heating wires, they can bow outwards as they thermally expand which can lead to contact between adjacent wires resulting in a short circuit. Additionally documents US 5802957 A and US 3 350 997 A form further prior art. Document US 3 350 997 A discloses a thermostat device for an electric toaster adapted to toast bread slices in succession and at random intervals such that the bread slices always come out in a uniform brown color irrespective of variations in supply voltage, room temperature or other toasting conditions.

### SUMMARY

With the above issues in mind, one aspect of the present invention provides a toaster for toasting bread or other food according to claim 1.

Preferably, the heating panel has a thermal insulation card and the electrical conductor is a heating wire supported on the card in a serpentine configuration such that the generally vertical conductive paths are spaced across one side of the card facing the carriage.

Preferably, the heating panel has a bottom bracket connected to the linkage assembly, and the heating panel is mounted within the body such that the bottom bracket moves downward in response to the thermal extension to the expanded form.

Preferably, the thermal insulation card has an upper portion and a lower portion, the lower portion being configured to move downward relative to the upper portion in response to the thermal expansion.

Preferably, the thermal insulation card is formed from mica and the heating wire is a nichrome alloy.

Preferably, the linkage assembly has a plurality of levers connected in series such that downward movement of the bottom bracket is amplified to greater downward movement of the bread carriage.

Preferably, the downward movement of the bottom bracket is controllable by varying electrical power supplied to the heating panel.

Preferably, the linkage assembly has a first fulcrum fixed to the body and a first lever with a first lever input arm pivotally connected to the bottom bracket and the first fulcrum, and an output lever arm fixed to the first input lever arm, the first input lever arm being shorter than the first output lever arm, and,
a second fulcrum fixed to the body and a second lever input arm pivotally connected to the second fulcrum and a second output arm fixed to the second input arm and connected to the bread carriage, the second input arm being shorter than the second output arm, and the linkage assembly further having:
a linkage arm connecting the first output arm to the second input arm such that movement of the first input arm lifts or lowers the bread carriage.

The linkage assembly may alternatively comprise two linkage sub-assemblies.

The two linkage sub-assemblies are preferably mirrored. The two linkage sub-assemblies are also preferably disposed at opposing ends of the bread carriage.

Each linkage sub-assembly may include:
a first fulcrum fixed to the body and a first lever with a first lever input arm pivotally connected to the bottom bracket and the first fulcrum, and an output lever arm fixed to the first input lever arm, the first input lever arm being shorter than the first output lever arm, and,
a second fulcrum fixed to the body and a second lever input arm pivotally connected to the second fulcrum and a second output arm fixed to the second input arm and connected to the bread carriage, the second input arm being shorter than the second output arm, and the linkage sub-assembly further having:
   a linkage arm connecting the first output arm to the second input arm such that movement of the first input arm lifts or lowers the bread carriage.

Another aspect of the invention provides a method according to claim 11.

Preferably, the pre-set time period is between 1 second and 4 seconds.

Preferably, the carriage moves from the lowered position during the predetermined toasting cycle.

Preferably, the toaster further comprises bread guards as a barrier between the bread and the heating panel, and the carriage moves from the lowered position during the predetermined toasting cycle to reduce visible grill marks on the slice caused by the bread guards.

Preferably, the heating panel thermally expands when activated and this expansion moves the carriage such that the carriage is moved from the lowered position during the predetermined toasting cycle by varying power to the heating panel.

Preferably, the toaster generates an alert in response to a determination that the carriage is not at the lowered position after the pre-set time period elapses from the activation of the heating panel.

In a third aspect not covered by the appended claims, the present disclosure provides a toaster for toasting bread or other food, the toaster comprising:
a body having an upward facing slot to receive a slice of bread or a food to be toasted; 15250968-1
a carriage mounted in the body beneath the slot to receive a slice of bread, the carriage being movable between an elevated position and a lowered position;
a heating panel mounted to the body in an upright configuration adjacent the carriage for toasting a side of a slice of bread during a toasting cycle;
a lift mechanism for lifting and lowering the carriage;
a bread guard between the carriage and the heating panel to prevent contact between the slice and the bread and the heating panel; and,
a processor for operative control of the heating panel and the lift mechanism; wherein,
the processor is configured to move the carriage with the lift mechanism during the toasting cycle to reduce visible grill marks in the slice from the bread guard.

Preferably, the lift mechanism is provided by the heating panel and a linkage assembly, the linkage assembly connecting the heating panel to the carriage, and the heating panel has a contracted form when not toasting bread, and an expanded form when toasting bread, the heating panel having a vertical dimension in the contracted form that is less than the vertical dimension in the expanded form, and the linkage assembly is configured to move the carriage from the elevated position to the lowered position when the heating panel moves from the contracted form to the expanded form.

Preferably, the heating panel has an electrical conductor defining a series of generally vertical conductive paths spaced across the heating panel such that resistive heating of the electrical conductor causes thermal expansion to move the heating panel to the expanded form.

Preferably, the processor is configured to move the carriage during the toasting cycle by varying electrical power to the heating panel.

Preferably, the heating panel has a thermal insulation card and the electrical conductor is a heating wire supported on the card in a serpentine configuration such that the generally vertical conductive paths are spaced across one side of the card facing the carriage.

Preferably, the heating panel has a bottom bracket connected to the linkage assembly, and the heating panel is mounted within the body such that the bottom bracket moves downward in response to the thermal extension to the expanded form.

Preferably, the thermal insulation card has an upper portion and a lower portion, the lower portion being configured to move downward relative to the upper portion in response to the thermal expansion.

Preferably, the thermal insulation card is formed from mica and the heating wire is a nichrome alloy.

### BRIEF DESCRIPTION OF THE DRAWINGS

Preferred embodiments of the present invention will now be described by way of example only with reference to the accompany drawings in which:
Figure 1A shows a toaster for toasting slices of bread according to the present invention;
Figure 1B shows the heating side of a heater panel in its contracted form, and a lift mechanism for a bread carriage within a toaster;
Figure 2 shows the non-heating side of the heater panel and bread carriage lift mechanism shown in Figure 1;
Figure 3 shows the heating side of the heater panel in its expanded form with the bread carriage in the lowered position;
Figure 4 shows the non-heating side of the heater panel shown in Figure 2 with the bread carriage in the lowered position;
Figure 5a is a plan view of the heater panel shown in Figure 1;
Figure 5b is an enlarged view of inset A shown in Figure 5a;
Figure 6 is a perspective view of the heating side of the heater panel and the bread carriage in the elevated position;
Figure 7 is a perspective view of the heating side of the heater panel with the bread carriage in the lowered position;
Figure 8 is a pair of heater panels positioned on both sides of a bread carriage in the elevated position;
Figure 9 is a plan view of the pair of heater panels shown in Figure 8;
Figure 10 is a perspective view of the heating side of the heater panel with the bread carriage in an elevated position together with a schematic representation of the sensor for detecting the presence of bread;
Figure 11 is a flow chart schematically depicting the operation of the toaster according to the present invention;
Figure 12 shows a perspective of the bread carriage holding a slice of bread and a bread guard positioned between the heater panel and the slice of bread;
Figure 13 shows the heater panel of Figure 13 covered by the bread guard;
Figure 14A shows a slice of bread behind a bread guard as it is toasted;
Figure 14B shows the slice of bread lifted by a small amount relative to the bread guard to reveal the 'grill marks' or inconsistent toasting caused by the bread guard masking the surface of the bread from the heater panel;
Figure 15 is a perspective view of a lift mechanism for a bread carriage within a toaster, with the bread carriage in an elevated position; and
Figure 16 is a perspective view of the lift mechanism shown in Figure 15, with the bread carriage in a lowered position.

### DESCRIPTION OF EMBODIMENTS

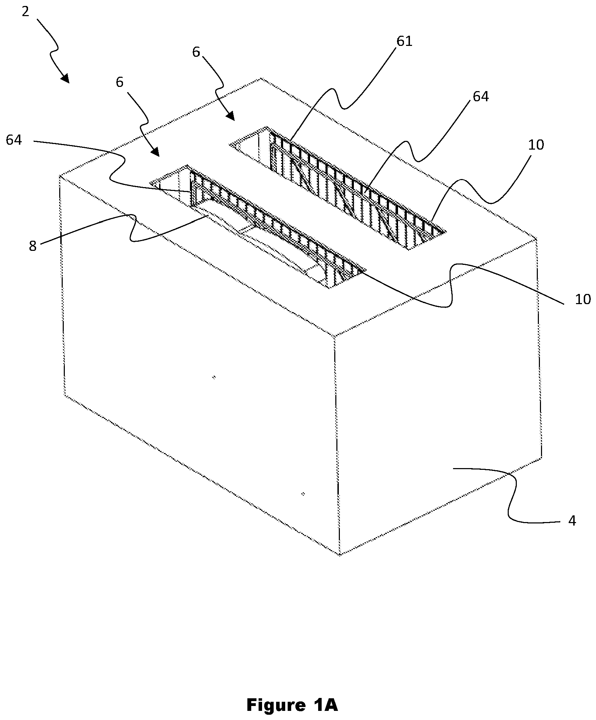

Referring to the Figures, a toaster 2 for toasting slices of bread 8 is depicted and described in detail. However, it will be appreciated the toaster may toast or heat other food products such as pastry, muffins, crumpets and so on. As shown in Figure 1A, the toaster 2 has a body 4 with a number of upwardly facing slots 6 for receiving slices of bread 8. Beneath each of the slots 6 is a bread carriage 16 (described below) positioned between opposing heated panels 10. A bread guard 64 between the bread slice 8 and the heating side 61 of the panel 10 guards against contact with the elements of the panel 10. It will be appreciated that the number and configuration of the slots 6 is not necessarily limited to what is shown in the drawings and described above, and may be customised to suit the design requirements of the toaster 2.

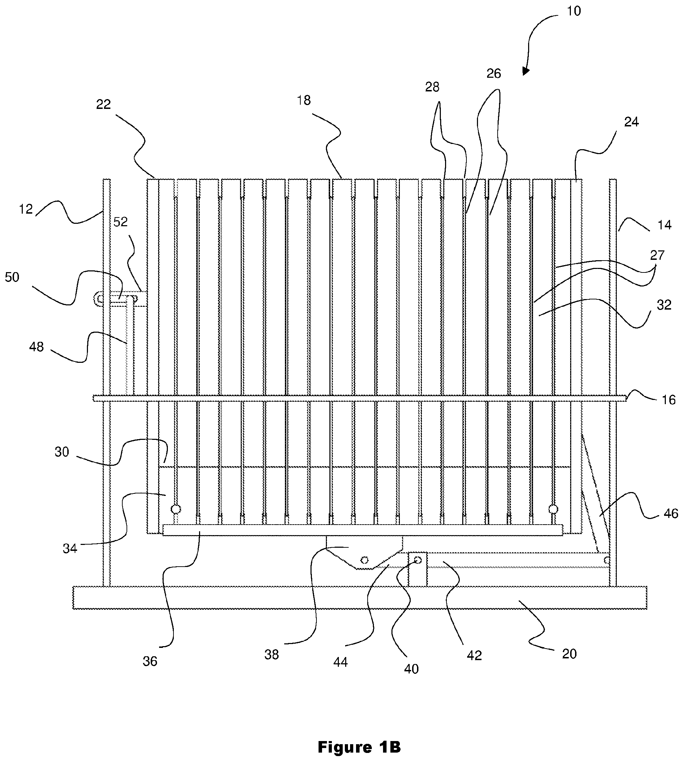

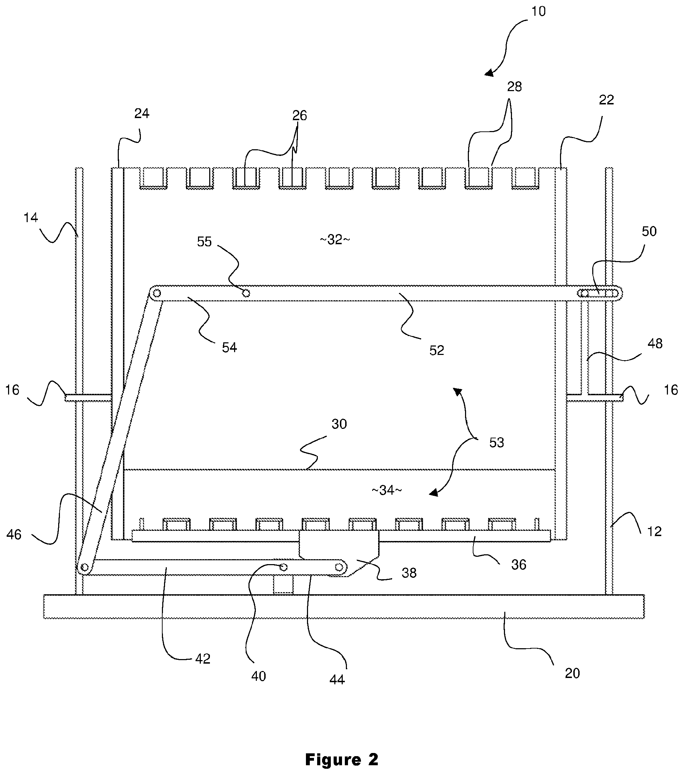

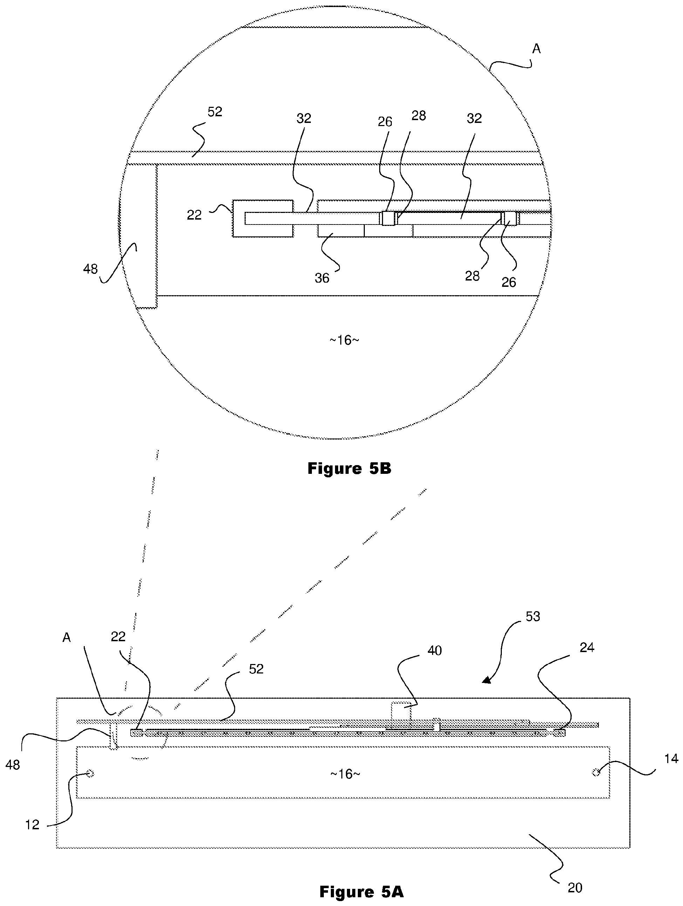

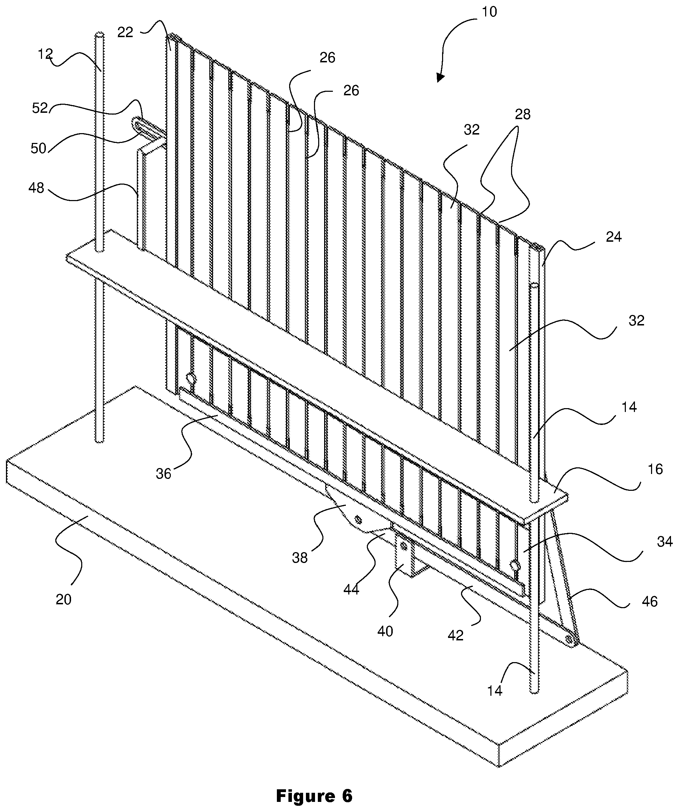

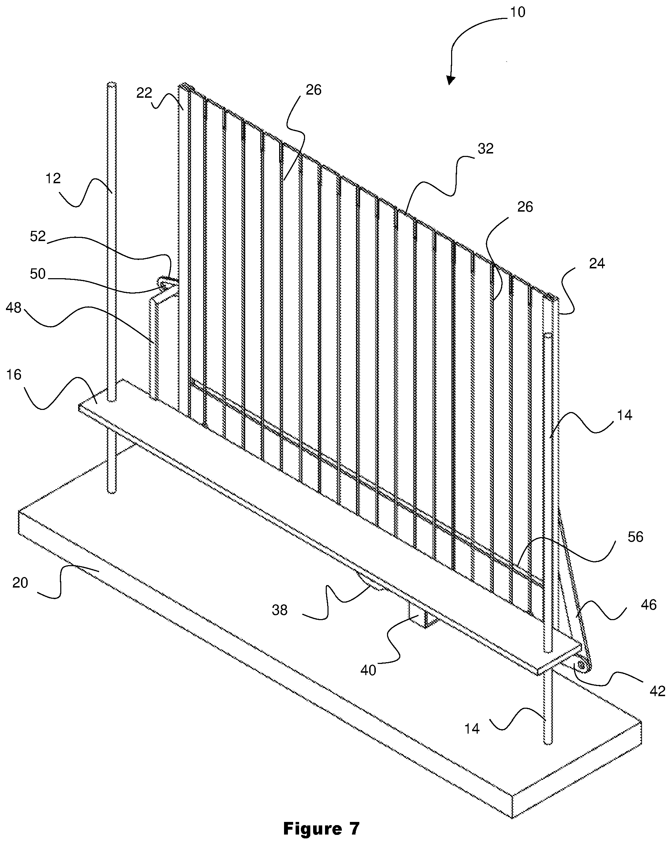

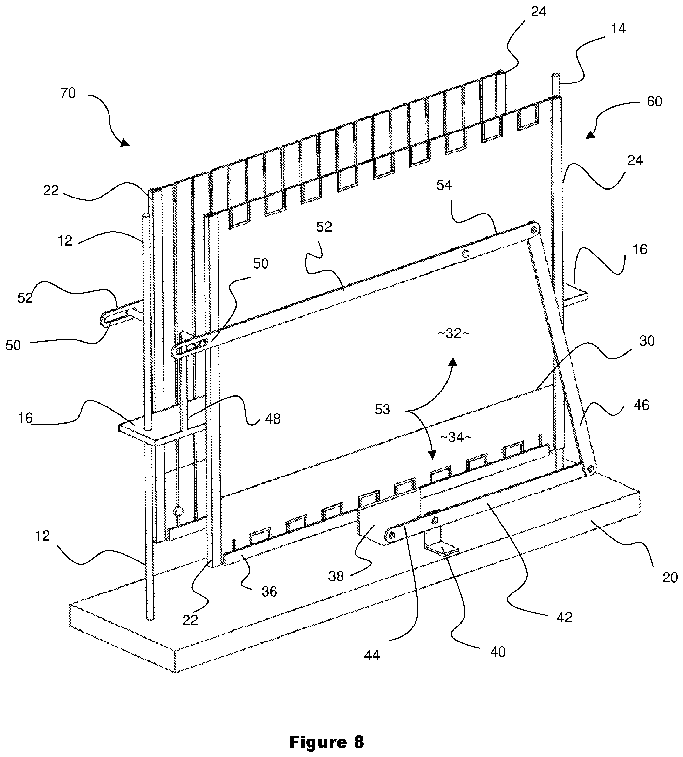

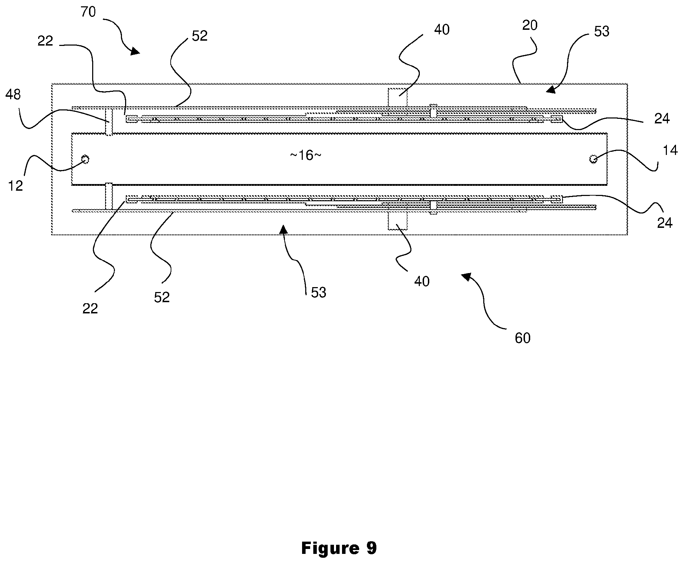

Figure 1B shows the heating side 61 of a heater panel 10 with the bread carriage 16 in an elevated position, and the bread guard 64 removed for clarity. Figure 2 shows the heater panel 10 of Figure 1B from the non-heating side with the bread carriage 16 in the elevated position. The bread carriage 16 slides between the elevated position and a lowered position along first guide rail 12 and second guide rail 14. The bread carriage 16 may alternatively slide between the elevated position and the lowered position along only one of the guide rails 12 or 14. Opposing heater panels 10 are positioned on either side of the bread carriage 16 such that the heating sides 61 face each other to simultaneously toast both sides of the slice of bread. In the interest of clarity, Figures 1B to 7 show a single heater panel 10, however the pair of inwardly facing heater panels 60 and 70 are shown in Figures 8 to 10.

The first and second guide rails 12 and 14 may be fixed to a supporting base 20 provided by the body 4 of the toaster 2. The heater panel 10 may also be fixed to the body 4 such that the first and second side edge channels 22 and 24 are fixedly secured relative to the base 20 and the body 4. The edge channels 22 and 24 hold the side edges of a thermally insulating card 18 which is typically formed from mica which contains aluminosilicate minerals to resist high temperatures and provides a good insulator. This may at least protect the components outside the toasting cavity from excessive temperatures that may cause damage or risk burning the user.

The mica card 18 may be provided in two portions with an upper portion 32 abutting the lower portion 34 along a split line 30 when the bread carriage 16 is in the elevated position. While the upper portion 32 of the mica card 18 is fixed in the side edge channels 22 and 24, the lower portion 34 is free to slide within the side edge channels 22 and 24. A bottom bracket 36 extending along the lower edge of the mica card 18 also moves together with the lower portion 34 relative to the upper portion 32.

The top and bottom edges of the mica card 18 may have a series of spaced edge grooves 28. An electrically conductive heater in the form of resistive heating wire 26 is wound onto the mica card 18 in a serpentine configuration to provide a series of generally vertical conductive paths 27. Activating the heater panel 10 provides current to the heater wire 26 to generate resistive heating. As the heater wire 26 increases in temperature, it expands in accordance with its coefficient of thermal expansion. One example of heater wire with suitable resistive properties as well as sufficient coefficient of thermal expansion, is nichrome metal alloy wire.

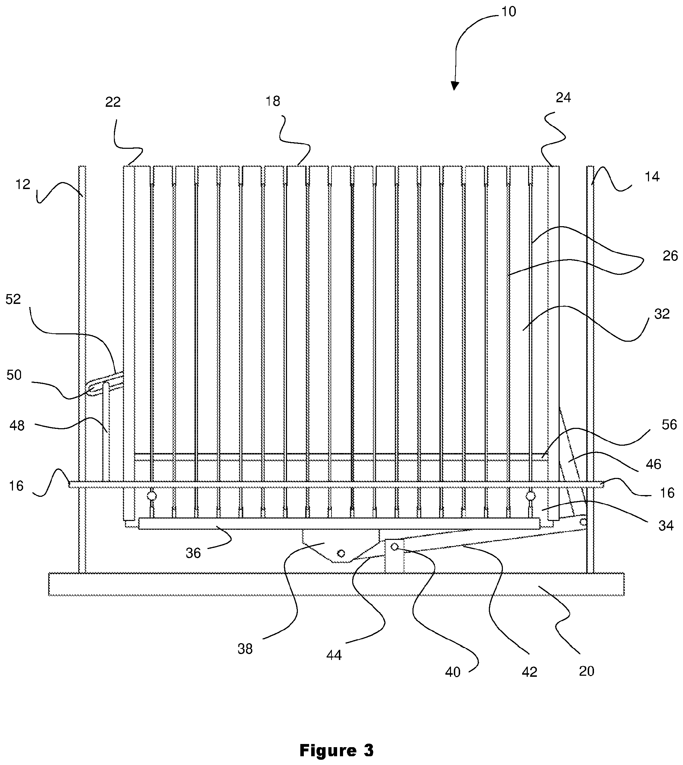

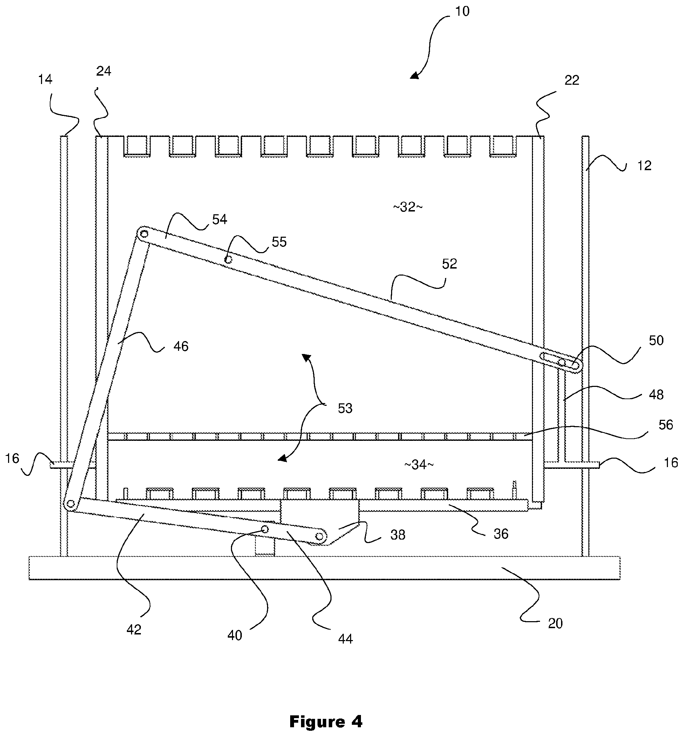

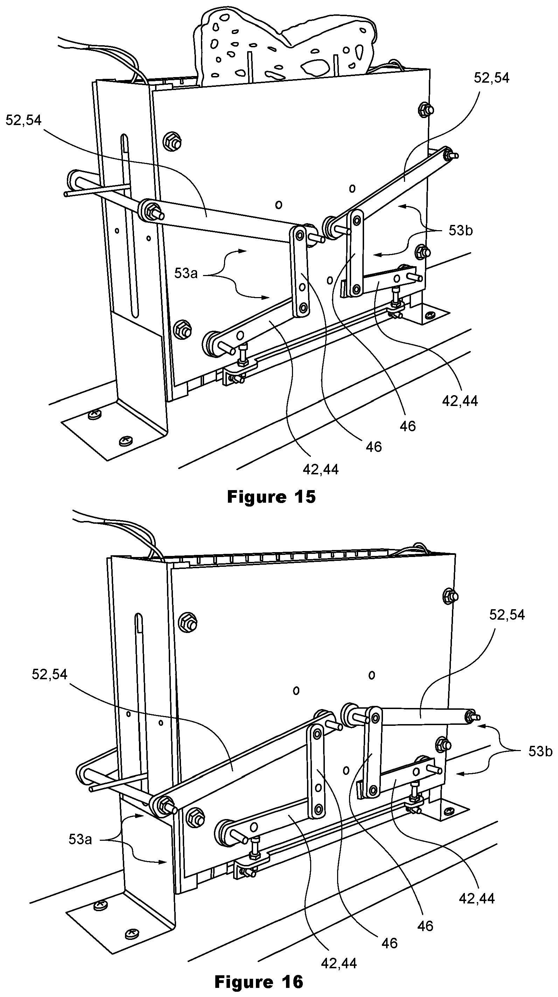

With the heater wire 26 configured such that it predominantly extends in a vertical direction, the thermal expansion of the heater wire 26 is likewise in the vertical direction. As shown in Figures 3 and 4, the lengthening of the conductive heating wire 26 along the conductive paths 27 opens a gap 56 between the upper and lower portions 32 and 34 of the mica card 18. The lower portion 34 slides vertically downwards in the first and second side edge channels 22 and 24. Likewise, the pivot connection 38 fixed to the bottom bracket 36 also moves downwards. The heater panel 10 connects to the bread carriage 16 via a linkage assembly 53. As best shown in Figures 2 and 4, the linkage assembly 53 may be provided by two interconnected levers that effectively amplify the vertical displacement of the bottom bracket 36 to the required length of vertical travel between the elevated position and the lowered position of the bread carriage 16. In other embodiments (for example, as shown in Figures 15 and 16), the linkage assembly 53 may include a pair of linkage "sub-assemblies" 53a and 53b, with each sub-assembly 53a, 53b having two interconnected levers disposed on opposing ends of the bread carriage 16. The two linkage sub-assemblies 53a and 53b may have a mirrored configuration.

**In** the first embodiment of the linkage assembly 53 having two interconnected levers (as best shown in Figures 2 to 4), the first lever of the linkage assembly 53 is pivotally connected to a first fulcrum 40 fixed to the base 20. The first input arm 44 is hinged to the pivot connection 38 on the bottom bracket 36 and extends to the first fulcrum 40. The first output arm 42 is fixed to the first input arm and extends to a pivot connection on the linkage arm 46.

The linkage arm 46 connects the first lever to the second lever. Specifically, the linkage arm 46 connects the first output arm 42 to the second input arm 54 of the second lever which pivots about a second fulcrum 55. The second input arm 54 extends from a pivot connection to the linkage arm 46 to the second fulcrum 55 while the second output arm 52 extends from the second input arm 54 to the carriage lifter 48 attached to the bread carriage 16. As the distal end of the second output arm 52 moves in an arc, an elongate slot 50 is provided to slidably retain the end of the bread carriage lifter 48.

To facilitate or amplify the vertical movement of the heater panel 10 between its retracted form and expanded form, the linkage assembly 53 is configured such that the first input arm 44 is shorter than the first output arm 42, and the second input arm 54 is shorter than the second output arm 52. As shown in Figures 8, 9 and 10, the bread carriage 16 is raised and lowered by a pair of mirror image heater panels 60 and 70, each with their own linkage assemblies 53 acting on separate bread carriage lifter 48. The combined downward force on the respective first input arms 44 as the heater panels 60 and 70 move to the expanded form, easily exceeds the weight of a bread slice on the carriage 16, even though the vertical movement has been amplified by the linkage assemblies 53.

It will be appreciated that the second embodiment of the linkage assembly 53 having the pair of linkage sub-assemblies 53a and 53b with each sub-assembly 53a, 53b having two interconnected levers (as best shown in Figures 15 and 16) may function in a similar manner as the embodiment of the linkage assembly 53 having two interconnected levers described above. Accordingly, like reference numerals have been used to describe like features or parts shown in Figures 15 and 16. In this embodiment, the interconnected levers of each sub-assembly 53a, 53b on either end of the bread carriage 16 have a smaller form factor and the sub-assemblies 53a, 53b effectively mirror each other to form the pair. Accordingly, the mechanical action of the linkage sub-assemblies 53a, 53b may be performed equally or simultaneously on both ends of the bread carriage 16 to deliver equal lift.

As shown in Figures 15 and 16, the pivot points/connections on the linkage arms 46 remain in generally similar relative locations, with the length of each arm 46 being reduced to accommodate two linkage sub-assemblies 53a and 53b within the width of the associated toaster components. By way of example, each linkage sub-assembly 53a, 53b may include a first lever having a first arm or arms 42, 44 (generally in accordance with the first output arm 42 and first input arm 44 described above), a second lever having a second arm or arms s 52, 54 (generally in accordance with the second output arm 52 and second input arm 54 described above), and a linkage arm 46 connecting the first lever to the second lever. Movement of the first arm or arms results in movement of the linkage arm and the second arm or arms, which in turn results in the lifting or lowering of the bread carriage 16.

Similar to the first embodiment of the linkage assembly 53 described above, the second embodiment of the linkage assembly 53 having the pair of linkage sub-assemblies 53a and 53b may be duplicated such that a mirrored linkage assembly "set" may be provided for each of the opposing heater panels 60, 70. Accordingly, in this arrangement, both sets of mirrored linkage assemblies 53 may operate in parallel/tandem to further facilitate or amplify the movement of the bread carriage 16. It will also be appreciated that the provision of the dual linkage sub-assemblies 53a and 53b may at least increase the lifting power of the linkage assembly for moving the bread carriage 16, such that heavier loads (e.g. heavier breads) may be lifted, and also lowered.

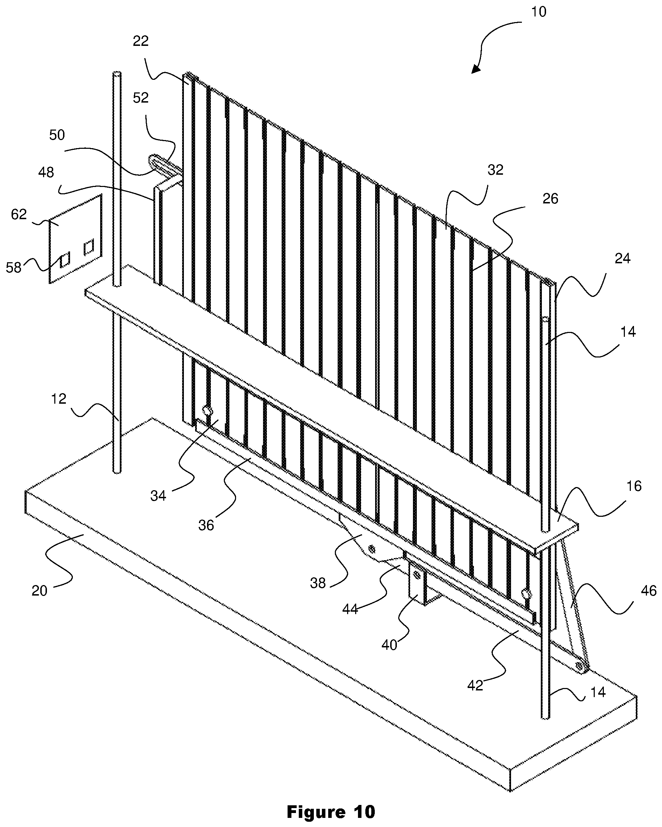

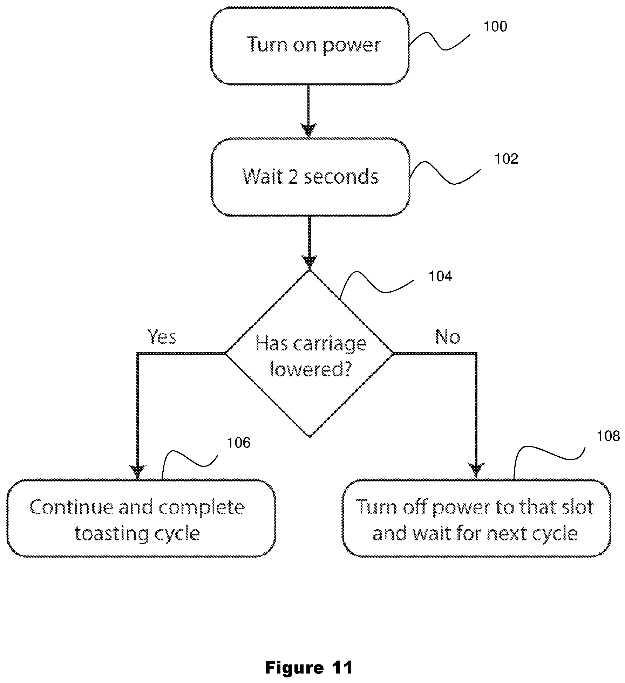

As best shown in Figures 10 and 11, the toaster 2 incorporates a processor 62 and bread sensor 58. In some embodiments, the bread sensor 58 is in the form of an optical sensor, Hall effect proximity sensor or micro-switch to detect when a slice of bread or other food product is placed on the bread carriage 16. The weight of the bread slice on the carriage 16 provides downward bias on the bottom bracket 36. This helpfully keeps some tension on the vertical paths 27 of the heater wire 26 to prevent bowing and potential short circuits.

Detection of bread on the carriage 16 by the sensor 58 activates the heating panels 60 and 70 (step 100). As the heating wire 26 rapidly heats and expands, the sensor 58 is configured to wait a pre-set time, for example between 1 second and 4 seconds, and preferably approximately two seconds, before checking whether the carriage 16 has lowered (step 102). If the controller 62 determines the bread carriage has lowered (determination 104), the toaster 2 will continue toasting both sides of the bread slice simultaneously until completion of the toasting cycle (step 106). If the processor 62 determines that the bread carriage 16 has not lowered from the sensor 58 feedback, power to the heating panels 60 and 70 associated with the slot 6 is discontinued until the next toasting cycle (step 108) to avoid wasting power. The controller 62 may also provide an alert as a warning or to remind the user that the bread is not within the slot or the bread is not correctly positioned within the slot. This alert may be communicated to the user via a user interface. The user may be able to customise the sensor sensitivity based on a particular type of bread they prefer. For example, bread with a light weight may cause small movement of the bread carriage, which requires high sensor sensitivity.

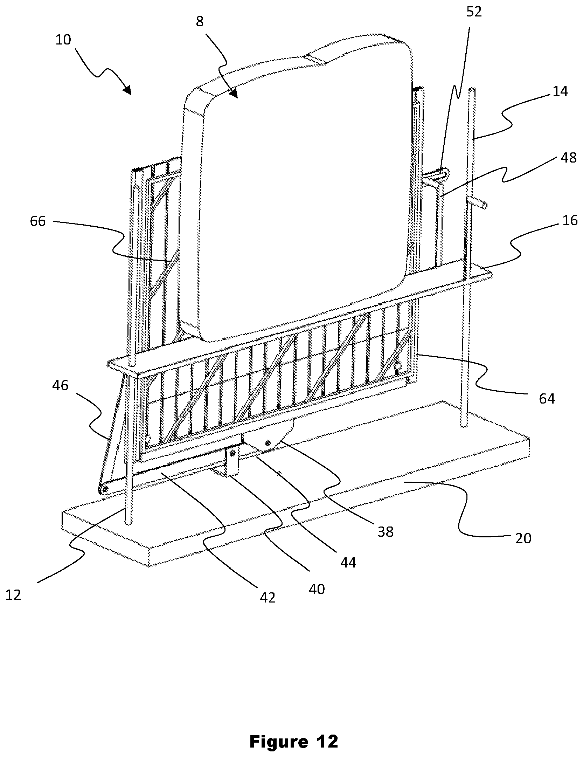

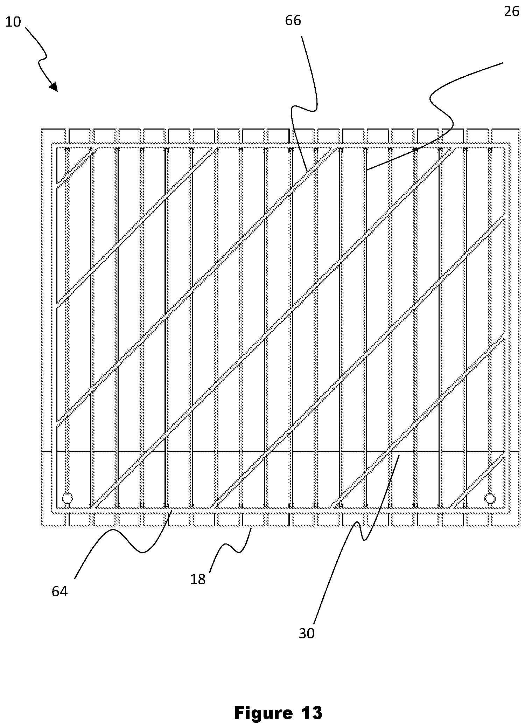

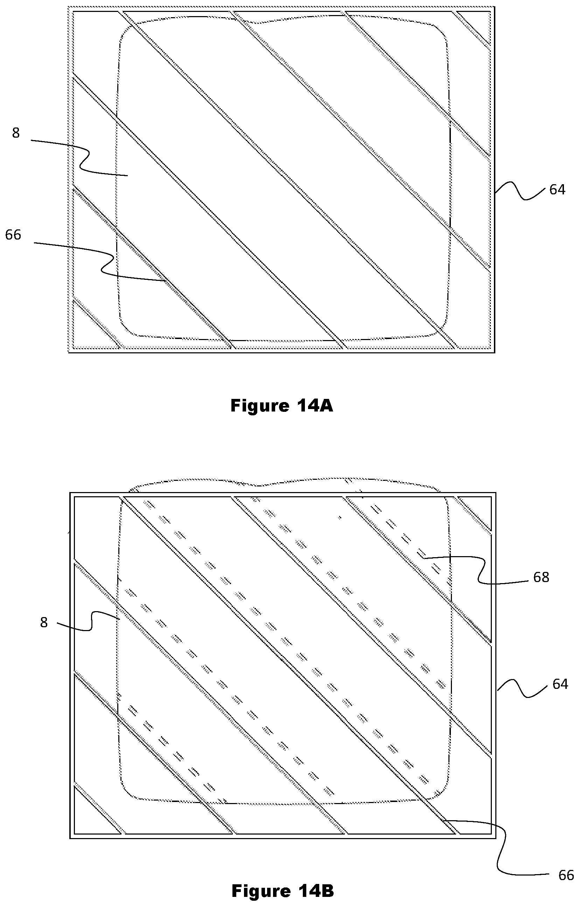

Figures 12, 13 14A and 14B show the lift mechanism (provided by the heating panel 10 and the linkage assembly 53) being used to reduce or avoid the appearance of grill marks 68 on a slice of toast 8. Grill marks 68 on the toast result from guard elements 66 in the bread guard 64 masking or 'shading' the bread surface from radiant heat from the heater panel 10. During the toasting cycle, the vertical position of the bread slice 8 within the toaster can be varied by adjusting power to the heater panel 10. Figure 14A shows the slice 8 in the lowered position. The bread guard 64 between the slice 8 and the heater panel 10 has a series of guard elements 66 as a barrier preventing contact with the heater wires. However, these guard elements 66 mask portions of the bread slice 8 from at least some of the heat radiating from the heater panel 10. The portions make visible grill marks 68 on the surface of the slice 8 and indicate inconsistent toasting.

Figure 14B shows the slice lifted away from the lowered position for at least some of the toasting cycle. This exposes the portions of the slice 8 that were previously masked by the heater 10 for more consistent toasting. In turn, the grill marks 68 are reduced or removed from the slice of toast 8. It will be appreciated that the bread slice 8 need only move a small amount relative to the bread guard 64. Moving the slice 8 by the thickness of the guard elements 66 in the direction of travel of the carriage 16 will expose the previously masked portions. It will be appreciated that the travel direction of the bread carriage should not be parallel to the extent of the guard elements 66. For example, if the guard elements 66 of Figures 14A and 14B were vertical, the vertical lift of the slice 8 would not reduce the grill marks 68. It will also be understood that the toasting cycle need not start at the lowered position and then lift away to expose the grill marks 68. As long as there is variation of the position of the bread slice 8 relative to the bread guard 64 during the toasting cycle (bearing in mind the orientation of the guard elements 66 discussed above), toasting will be more consistent and the grill marks 68 will be reduced.

Varying the position of the slice 8 during the toasting cycle may be achieved by adjusting the power to the heater wire 26, thereby increasing or decreasing the thermal expansion of the wire and hence the bread carriage 16 position. The amount of variation of power to the heaters may depend on the type of the bread and/or the user-selected toasting shade. Optionally, the user may manually input the variation of the position of the slice 8, and the timing of any variations, via the user interface (not shown).

The present invention has been described herein by way of example only. Skilled workers in this field will readily recognise many variations and modifications which do not depart from the scope of the present invention as defined by the appended claims.

### Component List

| | | | |
|---|---|---|---|
| 2 | toaster | 40 | first fulcrum |
| 4 | body | 42 | first output arm |
| 6 | slots | 44 | first input arm |
| 8 | slice of bread | 46 | linkage arm |
| 10 | heater panel | 48 | carriage lifter |
| 12 | first guide rail | 50 | elongate slot |
| 14 | second guide rail | 52 | second output arm |
| 16 | bread carriage | 53 | linkage assembly |
| 18 | thermally insulating card | 54 | second input arm |
| 20 | supporting base | 55 | second fulcrum |
| 22 | first side edge channel | 56 | gap |
| 24 | second side edge channel | 58 | sensor |
| 26 | heater wire | 60 | heater panel |
| 27 | conductive paths | 61 | heating side of heater panel |
| 28 | spaced edge grooves | 62 | processor |
| 30 | split line in the card | 64 | bread guard |
| 32 | upper portion of the card | 66 | guard elements |
| 34 | lower portion of the card | 68 | grill marks |
| 36 | bottom bracket | 70 | opposing heater panel |
| 38 | bottom bracket pivot connection | | |

## Claims

1. A toaster (2) for toasting bread or other food, the toaster (2) comprising:
a body (4) having an upward facing slot (6) to receive a slice of bread or a food to be toasted;
a carriage (16) mounted in the body (4) beneath the slot (6) to receive a slice of bread, the carriage (16) being movable between an elevated position and a lowered position;
a heating panel (10) mounted to the body (4) in an upright configuration adjacent the carriage (16) for toasting one side of a slice of bread in the carriage (16);
a linkage assembly (53) for connecting the heating panel (10) to the carriage (16);
**characterised in that**:
the heating panel (10) has a contracted form when not toasting bread, and an expanded form when toasting bread, the heating panel (10) having a vertical dimension in the contracted form that is less than the vertical dimension in the expanded form,
the heating panel (10) has an electrical conductor defining a series of generally vertical conductive paths (27) spaced across the heating panel (10) such that resistive heating of the electrical conductor causes thermal expansion of the electrical conductor to move the heating panel (10) to the expanded form, and
the linkage assembly (53) is configured to move the carriage (16) from the elevated position to the lowered position when the heating panel (10) moves from the contracted form to the expanded form.

2. A toaster (2) according to claim 1, wherein the heating panel (10) has a thermal insulation card (18) and the electrical conductor is a heating wire (26) supported on the card (18) in a serpentine configuration such that the generally vertical conductive paths (27) are spaced across one side of the card facing the carriage (16).

3. A toaster (2) according to claim 2, wherein the heating panel (10) has a bottom bracket (36) connected to the linkage assembly (53), and the heating panel (10) is mounted within the body (4) such that the bottom bracket (36) moves downward in response to the thermal extension to the expanded form.

4. A toaster (2) according to claim 3, wherein the thermal insulation card (18) has an upper portion and a lower portion, the lower portion being configured to move downward relative to the upper portion in response to the thermal expansion.

5. A toaster (2) according to claim 4, wherein the thermal insulation card (18) is formed from mica and the heating wire is a nichrome alloy.

6. A toaster (2) according to claim 5, wherein the linkage assembly (53) has a plurality of levers connected in series such that downward movement of the bottom bracket (36) is amplified to greater downward movement of the carriage (16).

7. A toaster (2) according to claim 6, wherein during use, the downward movement of the bottom bracket (36) is controllable by varying electrical power supplied to the heating panel (10).

8. A toaster (2) according to claim 6 or claim 7, wherein the linkage assembly (53) has a first fulcrum (40) fixed to the body (4) and first lever with a first lever input arm (44) pivotally connected to the bottom bracket (36) and the first fulcrum (40), and an output lever arm (42) fixed to the first input lever arm (44), the first input lever arm (44) being shorter than the first output lever arm (42), and,
a second fulcrum (55) fixed to the body (4) and a second lever input arm (54) pivotally connected to the second fulcrum (55) and a second output arm (52) fixed to the second input arm (54) and connected to the carriage (16), the second input arm (54) being shorter than the second output arm (52), and the linkage assembly (53) further having:
a linkage arm (46) connecting the first output arm (42) to the second input arm (54) such that movement of the first input arm (44) lifts or lowers the carriage (16).

9. A toaster (2) according to claim 6 or claim 7, wherein the linkage assembly (53) comprises two linkage sub-assemblies (53a, 53b), preferably wherein the two linkage sub-assemblies (53a, 53b) are mirrored, and preferably wherein the two linkage sub-assemblies (53a, 53b) are disposed at opposing ends of the carriage (16).

10. A toaster (2) according to claim 9, wherein each linkage sub-assembly (53a, 53b) includes:
a first fulcrum (40) fixed to the body (4) and a first lever with a first lever input arm (44) pivotally connected to the bottom bracket (36) and the first fulcrum (40), and an output lever arm (42) fixed to the first input lever arm (44), the first input lever arm (44) being shorter than the first output lever arm (42), and,
a second fulcrum (55) fixed to the body (4) and a second lever input arm (54) pivotally connected to the second fulcrum (55) and a second output arm (52) fixed to the second input arm (54) and connected to the carriage (16), the second input arm (54) being shorter than the second output arm (52), and the linkage sub-assembly (53a, 53b) further having:
a linkage arm (46) connecting the first output arm (42) to the second input arm (54) such that movement of the first input arm (44) lifts or lowers the carriage (16).

11. A method of operating a toaster (2) according to claim 1 with a body (4) and a carriage (16) movable between an elevated position and a lowered position within the body (4), and a heating panel (10) for toasting a slice of bread on the carriage (16), the method comprising:
placing a slice of bread on the carriage (16);
activating the heating panel (10);
after a pre-set time period, determining whether the carriage (16) is at the lowered position;
if the carriage (16) is determined to be at the lowered position, deactivating the heating panel (10) upon completion of a predetermined toasting cycle; and,
if the carriage (16) is not determined to be at the lowered position, deactivating the heating panel (10) without completing the predetermined toasting cycle.

12. A method according to claim 11, wherein the pre-set time period is between 1 second and 4 seconds, preferably wherein the carriage (16) moves from the lowered position during the predetermined toasting cycle, preferably wherein the toaster (2) generates an alert in response to a determination that the carriage (16) is not at the lowered position after the pre-set time period elapses from the activation of the heating panel (10).

13. A method according to claim 12, wherein the toaster (2) further comprises bread guards (64) as a barrier between the bread and the heating panel (10), and the carriage moves from the lowered position during the predetermined toasting cycle to reduce visible grill marks on the slice caused by the bread guards (54).

14. A method according to claim 13, wherein the heating panel (10) thermally expands when activated and this expansion moves the carriage (16) such that the carriage (16) is moved from the lowered position during the predetermined toasting cycle by varying power to the heating panel (10).

## Patentansprüche

1. Toaster (2) zum Toasten von Brot oder anderen Lebensmitteln, wobei der Toaster (2) umfasst:
einen Körper (4), der einen aufwärts gerichteten Schlitz (6) aufweist, um eine Scheibe Brot oder ein Lebensmittel, das getoastet werden soll, aufzunehmen;
einen Schlitten (16), der in dem Körper (4) unterhalb des Schlitzes (6) montiert ist, um eine Scheibe Brot aufzunehmen, wobei der Schlitten (16) zwischen einer angehobenen Position und einer abgesenkten Position bewegbar ist;
eine Heizplatte (10), die in aufrechter Konfiguration angrenzend an den Schlitten (16) an dem Körper (4) montiert ist, um eine Seite einer Scheibe Brot im Schlitten (16) zu toasten;
eine Verbindungsanordnung (53) zum Verbinden der Heizplatte (10) mit dem Schlitten (16);
**dadurch gekennzeichnet, dass**:
die Heizplatte (10) eine kontrahierte Form aufweist, wenn kein Brot getoastet wird, und eine expandierte Form, wenn Brot getoastet wird, wobei die Heizplatte (10) in der kontrahierten Form eine vertikale Abmessung aufweist, die kleiner ist als die vertikale Abmessung in der expandierten Form,
die Heizplatte (10) einen elektrischen Leiter aufweist, der eine Reihe von im Allgemeinen vertikalen leitenden Bahnen (27) definiert, die über die Heizplatte (10) verteilt sind, sodass die Widerstandserwärmung des elektrischen Leiters eine thermische Ausdehnung des elektrischen Leiters bewirkt, um die Heizplatte (10) in die expandierte Form zu bewegen, und
die Verbindungsanordnung (53) konfiguriert ist, um den Schlitten (16) von der angehobenen Position in die abgesenkte Position zu bewegen, wenn sich die Heizplatte (10) von der kontrahierten Form in die expandierte Form bewegt.

2. Toaster (2) nach Anspruch 1, wobei die Heizplatte (10) eine Wärmeisolierplatte (18) aufweist und der elektrische Leiter ein Heizdraht (26) ist, der auf der Platte (18) in einer schlangenförmigen Anordnung so gelagert ist, dass die im Allgemeinen vertikalen Leiterbahnen (27) über eine Seite der Platte, die dem Schlitten (16) zugewandt ist, beabstandet sind.

3. Toaster (2) nach Anspruch 2, wobei die Heizplatte (10) eine untere Halterung (36) aufweist, die mit der Verbindungsanordnung (53) verbunden ist, und die Heizplatte (10) so innerhalb des Körpers (4) montiert ist, dass sich die untere Halterung (36) als Reaktion auf die thermische Ausdehnung in die expandierte Form nach unten bewegt.

4. Toaster (2) nach Anspruch 3, wobei die Wärmeisolierplatte (18) einen oberen Abschnitt und einen unteren Abschnitt aufweist, wobei der untere Abschnitt konfiguriert ist, um sich als Reaktion auf die Wärmeausdehnung relativ zum oberen Abschnitt nach unten zu bewegen.

5. Toaster (2) nach Anspruch 4, wobei die Wärmeisolierplatte (18) aus Glimmer gebildet ist und der Heizdraht eine Nichromlegierung ist.

6. Toaster (2) nach Anspruch 5, wobei die Verbindungsanordnung (53) eine Vielzahl von Hebeln aufweist, die in Reihe geschaltet sind, so dass die Abwärtsbewegung der unteren Halterung (36) zu einer größeren Abwärtsbewegung des Schlittens (16) verstärkt wird.

7. Toaster (2) nach Anspruch 6, wobei während der Verwendung die Abwärtsbewegung der unteren Halterung (36) durch Variieren der an die Heizplatte (10) zugeführten elektrischen Leistung steuerbar ist.

8. Toaster (2) nach Anspruch 6 oder Anspruch 7, wobei die Verbindungsanordnung (53) einen ersten Drehpunkt (40), der am Körper (4) befestigt ist, und einen ersten Hebel mit einem ersten Hebeleingangsarm (44) aufweist, der schwenkbar mit der unteren Halterung (36) und dem ersten Drehpunkt (40) verbunden ist, und einen Ausgangshebelarm (42), der an dem ersten Eingangshebelarm (44) befestigt ist, wobei der erste Eingangshebelarm (44) kürzer ist als der erste Ausgangshebelarm (42), und,
einen zweiten Drehpunkt (55), der am Körper (4) befestigt ist, und einen zweiten Hebeleingangsarm (54), der schwenkbar mit dem zweiten Drehpunkt (55) verbunden ist, und einen zweiten Ausgangsarm (52), der am zweiten Eingangsarm (54) befestigt und mit dem Schlitten (16) verbunden ist, wobei der zweite Eingangsarm (54) kürzer ist als der zweite Ausgangsarm (52) und die Verbindungsanordnung (53) weiter aufweist:
einen Verbindungsarm (46), der den ersten Ausgangsarm (42) mit dem zweiten Eingangsarm (54) verbindet, so dass die Bewegung des ersten Eingangsarms (44) den Schlitten (16) anhebt oder absenkt.

9. Toaster (2) nach Anspruch 6 oder Anspruch 7, wobei die Verbindungsanordnung (53) zwei Verbindungsunteranordnungen (53a, 53b) umfasst, wobei die zwei Verbindungsunteranordnungen (53a, 53b) vorzugsweise gespiegelt sind und wobei die zwei Verbindungsunteranordnungen (53a, 53b) an gegenüberliegenden Enden des Schlittens (16) angeordnet sind.

10. Toaster (2) nach Anspruch 9, wobei jede Verbindungsunteranordnung (53a, 53b) beinhaltet:
einen ersten Drehpunkt (40), der am Körper (4) befestigt ist, und einen ersten Hebel mit einem ersten Hebeleingangsarm (44), der schwenkbar mit der unteren Halterung (36) und dem ersten Drehpunkt (40) verbunden ist, und einen Ausgangshebelarm (42), der am ersten Hebeleingangsarm (44) befestigt ist, wobei der erste Hebelarm (44) kürzer ist als der erste Ausgangshebelarm (42), und
einen zweiten Drehpunkt (55), der am Körper (4) befestigt ist, und einen zweiten Hebeleingangsarm (54), der schwenkbar mit dem zweiten Drehpunkt (55) verbunden ist, und einen zweiten Ausgangsarm (52), der am zweiten Eingangsarm (54) befestigt und mit dem Schlitten (16) verbunden ist, wobei der zweite Eingangsarm (54) kürzer ist als der zweite Ausgangsarm (52) und die Verbindungsunteranordnung (53a, 53b) weiter aufweist:
einen Verbindungsarm (46), der den ersten Ausgangsarm (42) mit dem zweiten Eingangsarm (54) verbindet, so dass die Bewegung des ersten Eingangsarms (44) den Schlitten (16) anhebt oder absenkt.

11. Verfahren zum Betreiben eines Toasters (2) nach Anspruch 1 mit einem Körper (4) und einem Schlitten (16), der innerhalb des Körpers (4) zwischen einer angehobenen Position und einer abgesenkten Position bewegbar ist, und einer Heizplatte (10) zum Toasten einer Scheibe Brot auf dem Schlitten (16), wobei das Verfahren umfasst:
Platzieren einer Scheibe Brot auf den Schlitten (16);
Aktivieren der Heizplatte (10);
nach einer voreingestellten Zeitspanne, Bestimmen, ob sich der Schlitten (16) in der abgesenkten Position befindet;
wenn bestimmt wird, dass sich der Schlitten (16) in der abgesenkten Position befindet, Deaktivieren der Heizplatte (10) nach Abschluss eines vorbestimmten Toastzyklus; und,
wenn nicht bestimmt wird, dass sich der Schlitten (16) in der abgesenkten Position befindet, Deaktivieren der Heizplatte (10), ohne den vorbestimmten Toastzyklus abzuschließen.

12. Verfahren nach Anspruch 11, wobei die voreingestellte Zeitspanne zwischen 1 Sekunde und 4 Sekunden liegt, wobei sich der Schlitten (16) vorzugsweise während des vorbestimmten Toastzyklus aus der abgesenkten Position bewegt, und wobei der Toaster (2) vorzugsweise einen Alarm auslöst, als Reaktion auf die Bestimmung, dass sich der Schlitten (16) nach Ablauf der voreingestellten Zeitspanne ab der Aktivierung der Heizplatte (10) nicht in der abgesenkten Position befindet.

13. Verfahren nach Anspruch 12, wobei der Toaster (2) weiter Brotschutzvorrichtungen (64) als Barriere zwischen dem Brot und der Heizplatte (10) umfasst und sich der Schlitten während des vorbestimmten Toastzyklus aus der abgesenkten Position bewegt, um sichtbare Grillstreifen auf der Scheibe zu verringern, die durch die Brotschutzvorrichtungen (54) verursacht werden.

14. Verfahren nach Anspruch 13, wobei sich die Heizplatte (10) thermisch ausdehnt, wenn sie aktiviert wird, und diese Ausdehnung den Schlitten (16) so bewegt, dass der Schlitten (16) während des vorbestimmten Toastzyklus durch Variieren der Leistung an die Heizplatte (10) aus der abgesenkten Position bewegt wird.

## Revendications

1. Grille-pain (2) pour griller du pain ou d'autres aliments, le grille-pain (2) comprenant :
un corps (4) présentant une fente orientée vers le haut (6) pour recevoir une tranche de pain ou un aliment à griller ;
un chariot (16) monté dans le corps (4) au-dessous la fente (6) pour recevoir une tranche de pain, le chariot (16) étant mobile entre une position élevée et une position abaissée ;
un panneau chauffant (10) monté sur le corps (4) dans une configuration verticale adjacente au chariot (16) pour griller un côté d'une tranche de pain dans le chariot (16) ;
un ensemble de liaison (53) pour relier le panneau chauffant (10) au chariot (16) ;
**caractérisé en ce que** :
le panneau chauffant (10) présente une forme contractée lorsqu'il ne grille pas de pain, et une forme dilatée lorsqu'il grille du pain, le panneau chauffant (10) présentant une dimension verticale dans la forme contractée inférieure à la dimension verticale dans la forme dilatée,
le panneau chauffant (10) présente un conducteur électrique définissant une série de trajets conducteurs généralement verticaux (27) espacés sur le panneau chauffant (10) de telle sorte que le chauffage par effet Joule du conducteur électrique provoque sa dilatation thermique, ce qui déplace le panneau chauffant (10) vers sa forme dilatée, et
l'ensemble de liaison (53) est configuré pour déplacer le chariot (16) de la position élevée à la position abaissée lorsque le panneau chauffant (10) se déplace de la forme contractée à la forme dilatée.

2. Grille-pain (2) selon la revendication 1, dans lequel le panneau chauffant (10) présente une carte d'isolation thermique (18) et le conducteur électrique est un fil chauffant (26) supporté sur la carte (18) dans une configuration en serpentin de sorte que les trajets conducteurs généralement verticaux (27) soient espacés sur un côté de la carte faisant face au chariot (16).

3. Grille-pain (2) selon la revendication 2, dans lequel le panneau chauffant (10) présente un support inférieur (36) relié à l'ensemble de liaison (53), et le panneau chauffant (10) est monté à l'intérieur du corps (4) de sorte que le support inférieur (36) se déplace vers le bas en réponse à la dilatation thermique de la forme dilatée.

4. Grille-pain (2) selon la revendication 3, dans lequel la carte d'isolation thermique (18) présente une partie supérieure et une partie inférieure, la partie inférieure étant configurée pour se déplacer vers le bas par rapport à la partie supérieure en réponse à la dilatation thermique.

5. Grille-pain (2) selon la revendication 4, dans lequel la carte d'isolation thermique (18) est formée de mica et le fil chauffant est un alliage de nichrome.

6. Grille-pain (2) selon la revendication 5, dans lequel l'ensemble de liaison (53) présente une pluralité de leviers connectés en série de telle sorte que le mouvement vers le bas du support inférieur (36) soit amplifié pour un plus grand mouvement vers le bas du chariot (16).

7. Grille-pain (2) selon la revendication 6, dans lequel, pendant l'utilisation, le mouvement vers le bas du support inférieur (36) peut être commandé en faisant varier la puissance électrique fournie au panneau chauffant (10).

8. Grille-pain (2) selon la revendication 6 ou la revendication 7, dans lequel l'ensemble de liaison (53) présente un premier point d'appui (40) fixé au corps (4) et un premier levier avec un premier bras d'entrée de levier (44) relié de manière pivotante au support inférieur (36) et au premier point d'appui (40), et un bras de levier de sortie (42) fixé au premier bras de levier d'entrée (44), le premier bras de levier d'entrée (44) étant plus court que le premier bras de levier de sortie (42), et,
un second point d'appui (55) fixé au corps (4) et un second bras d'entrée de levier (54) relié de manière pivotante sur le second point d'appui (55) et un second bras de sortie (52) fixé au second bras d'entrée (54) et relié au chariot (16), le second bras d'entrée (54) étant plus court que le second bras de sortie (52), et l'ensemble de liaison (53) présentant en outre :
un bras de liaison (46) reliant le premier bras de sortie (42) au second bras d'entrée (54) de sorte que le mouvement du premier bras d'entrée (44) soulève ou abaisse le chariot (16).

9. Grille-pain (2) selon la revendication 6 ou la revendication 7, dans lequel l'ensemble de liaison (53) comprend deux sous-ensembles de liaison (53a, 53b), de préférence dans lequel les deux sous-ensembles de liaison (53a, 53b) sont disposés en miroir, et de préférence dans lequel les deux sous-ensembles de liaison (53a, 53b) sont disposés à des extrémités opposées du chariot (16).

10. Grille-pain (2) selon la revendication 9, dans lequel chaque sous-ensemble de liaison (53a, 53b) inclut :
un premier point d'appui (40) fixé au corps (4) et un premier levier avec un premier bras d'entrée de levier (44) relié de manière pivotante au support inférieur (36) et au premier point d'appui (40), et un bras de levier de sortie (42) fixé au premier bras de levier d'entrée (44), le premier bras de levier d'entrée (44) étant plus court que le premier bras de levier de sortie (42), et,
un second point d'appui (55) fixé au corps (4) et un second bras d'entrée de levier (54) articulé sur le second point d'appui (55) et un second bras de sortie (52) fixé au second bras d'entrée (54) et relié au chariot (16), le second bras d'entrée (54) étant plus court que le second bras de sortie (52), et le sous-ensemble de liaison (53a, 53b) présentant en outre :
un bras de liaison (46) reliant le premier bras de sortie (42) au second bras d'entrée (54) de sorte que le mouvement du premier bras d'entrée (44) soulève ou abaisse le chariot (16).

11. Procédé de fonctionnement d'un grille-pain (2) selon la revendication 1, avec un corps (4) et un chariot (16) mobile entre une position élevée et une position abaissée à l'intérieur du corps (4), et un panneau chauffant (10) pour griller une tranche de pain sur le chariot (16), le procédé comprenant les étapes consistant à :
placer une tranche de pain sur le chariot (16) ;
activer le panneau chauffant (10) ;
après une période de temps prédéfinie, déterminer si le chariot (16) est en position abaissée ;
si le chariot (16) est déterminé pour être en position abaissée, désactiver le panneau chauffant (10) à la fin d'un cycle de grillage prédéterminé ; et,
si le chariot (16) n'est pas déterminé être en position abaissée, désactiver le panneau chauffant (10) sans terminer le cycle de grillage prédéterminé.

12. Procédé selon la revendication 11, dans lequel la période de temps prédéfinie est comprise entre 1 seconde et 4 secondes, de préférence dans lequel le chariot (16) se déplace de la position abaissée pendant le cycle de grillage prédéterminé, de préférence dans lequel le grille-pain (2) génère une alerte en réponse à une détermination que le chariot (16) n'est pas en position abaissée après l'expiration de la période de temps prédéfinie à partir de l'activation du panneau chauffant (10).

13. Procédé selon la revendication 12, dans lequel le grille-pain (2) comprend en outre des protections à pain (64) comme barrière entre le pain et le panneau chauffant (10), et le chariot se déplace de la position abaissée pendant le cycle de grillage prédéterminé pour réduire les marques de grille visibles sur la tranche causées par les protections à pain (54).

14. Procédé selon la revendication 13, dans lequel le panneau chauffant (10) se dilate thermiquement lorsqu'il est activé et cette dilatation déplace le chariot (16) de sorte que le chariot (16) soit déplacé de la position abaissée pendant le cycle de grillage prédéterminé en faisant varier la puissance du panneau chauffant (10).
